# EUROPEAN PATENT APPLICATION

(11) **EP 4 636 940 A1**
(43) Date of publication of application: **22.10.2025**
(21) Application number: 23903195.8
(22) Date of filing: 16.11.2023
(51) Int. Cl.: H01M 50/536, H01G 11/66, H01G 11/74, H01G 11/84, H01M 10/04, H01M 10/0587

(54) **POWER STORAGE DEVICE MANUFACTURING METHOD AND POWER STORAGE DEVICE**

(30) Priority: 12.12.2022 JP 2022197848
(71) Applicant: Panasonic Energy Co., Ltd., Osaka 570-8511 (JP)
(72) Inventor: KUMAZAWA, Seiji, Kadoma-shi, Osaka 571-0057 (JP); HIROSE, Takayuki, Kadoma-shi, Osaka 571-0057 (JP); TSUJI, Yuta, Kadoma-shi, Osaka 571-0057 (JP)
(74) Representative: Novagraaf International SA
(86) International application number: PCT/JP2023/041185
(87) International publication number: WO 2024/127897

(57) **Abstract**

A method of manufacturing a power storage apparatus includes: preparing an electrode group having a structure in which a plurality of exposed portions (12a) of a current collector (12) are arranged; bringing the exposed portions (12a) arranged into contact with a first surface (21a) of a current collector plate (20, 22); irradiating a second surface (21b) of the current collector plate (20, 22) with a laser beam (L); scanning a scanned region (58) of the current collector plate (20, 22) with the laser beam (L) to join the plurality of exposed portions (12a) to the first surface (21a); and forming, through joining, a plurality of molten marks (60) and a non-molten portion (62) located between the adjacent molten marks (60) on the first surface (21a).

## Description

### TECHNICAL FIELD

The present invention relates to a method of manufacturing a power storage apparatus and to a power storage apparatus.

### BACKGROUND ART

In the related art, a power storage apparatus in which an electrode group is housed in an outer can is known. In a power storage apparatus like this, a current collector plate is welded to the end of the electrode group (see, for example, Patent Literature 1).

### RELATED-ART LITERATURE

### PATENT LITERATURE

[Patent Literature 1] JP2008-166030

### SUMMARY OF INVENTION

### TECHNICAL PROBLEM

We have made an extensive study on power storage apparatuses in which an electrode group and a current collector plate are joined and have found that there is room for improvement in the quality of conventional power storage apparatuses.

The present disclosure addresses the issue described above, and a purpose thereof is to provide a technology of improving the quality of power storage apparatuses.

### SOLUTION TO PROBLEM

An embodiment of the present disclosure relates to a method of manufacturing a power storage apparatus. The method includes: preparing an electrode group including a current collector in which an electrode active material layer is stacked, the electrode group having a structure in which a plurality of exposed portions of the current collector that are not coated with the electrode active material layer are arranged; bringing the plurality of exposed portions arranged into contact with a first surface of a current collector plate and irradiating a second surface of the current collector plate opposite to the first surface with a laser beam; scanning a scanned region overlapping the plurality of exposed portions and extending in a direction of arrangement of the exposed portions with the laser beam to join the plurality of exposed portions to the first surface; and forming, through joining, a plurality of molten marks having a dimension in a scanning direction of the laser beam larger than a dimension in a direction perpendicular to the scanning direction and a non-molten portion located between the adjacent molten marks on the first surface.

Another embodiment of the present disclosure relates to a power storage apparatus. The power storage apparatus includes: an electrode group including a current collector in which an electrode active material layer is stacked; a current collector plate joined to the current collector. The electrode group has a structure in which a plurality of exposed portions of the current collector that are not coated with the electrode active material layer are arranged, and the plurality of exposed portions arranged are joined to a first surface of the current collector plate. The first surface includes, in a region overlapping the plurality of exposed portions and extending in a direction of arrangement of the exposed portions, a plurality of molten marks having a dimension in a direction of arrangement larger than a dimension in a direction perpendicular to the direction of arrangement and a non-molten portion located between the adjacent molten marks.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the quality of a power storage apparatus can be improved.

### BRIEF DESCRIPTION OF DRAWINGS

[Fig. 1] Fig. 1 is a cross-sectional view of a power storage apparatus according to the embodiment.
[Fig. 2] Fig. 2A is an exploded perspective view of an electrode group. Fig. 2B is a plan view of the electrode group to which a first current collector plate is joined.
[Fig. 3] Figs. 3A-3C show the steps of joining the current collector and the current collector plate.
[Fig. 4] Figs. 4A-4L illustrate intensity adjustment of a laser beam.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiment are omitted in the drawings.

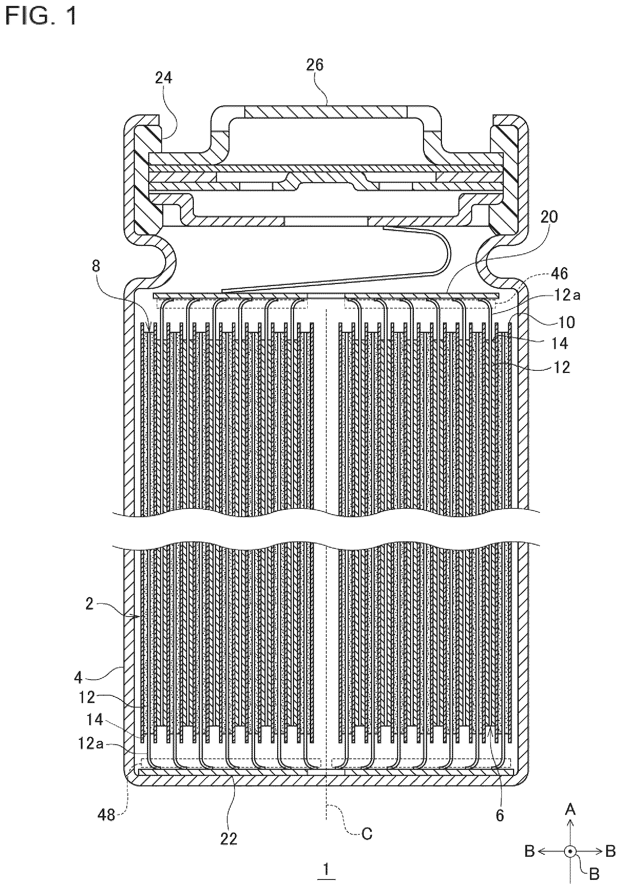

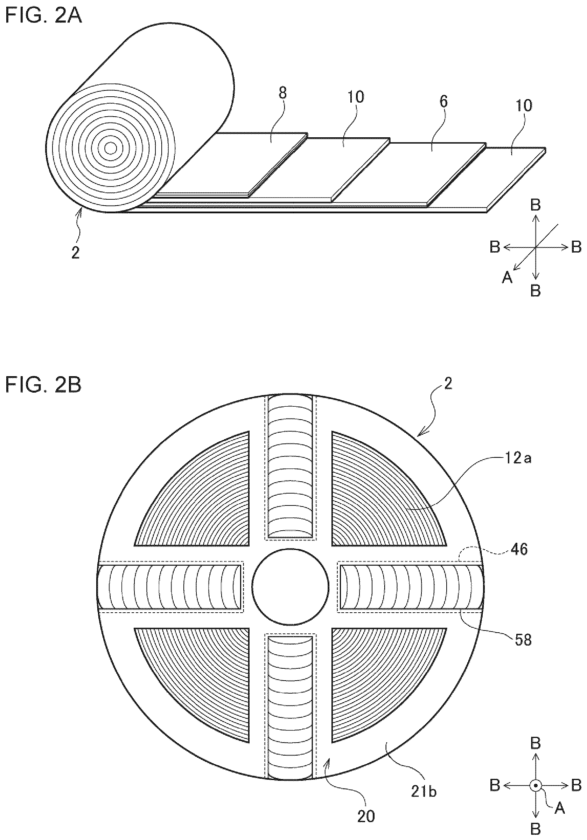

Fig. 1 is a cross-sectional view of a power storage apparatus 1 according to the embodiment. Fig. 2A is an exploded perspective view of an electrode group 2. Fig. 2B is a plan view of the electrode group 2 to which a first current collector plate 20 is joined. In Fig. 2A, the illustration of a current collector 12 and an electrode active material layer 14 in distinction from one another is omitted.

The power storage apparatus 1 is a rechargeable secondary battery exemplified by a lithium ion battery, a nickel hydride battery, a nickel-cadmium battery, etc. or a capacitor like an electric double layer capacitor. The power storage apparatus 1 has a structure in which the electrode group 2 is stored in an outer can 4 along with an electrolytic solution (not shown) and the first current collector plate 20 and a second current collector plate 22. The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape. In the embodiment, the first electrode plate 6 is the positive electrode plate and the second electrode plate 8 is the negative electrode plate. The first electrode plate 6 may be the negative electrode plate, and the second electrode plate 8 may be the positive electrode plate. The separator 10 is formed by a microporous film made of, by way of one example, a polypropylene resin or the like.

The first electrode plate 6 and the second electrode plate 8 include the current collector 12 and an electrode active material layer 14 stacked on the current collector 12. In the case of a general lithium ion secondary battery, the current collector 12 is comprised of an aluminum foil or the like when it is a positive electrode and is comprised of a copper foil or the like when it is a negative electrode. The electrode active material layer 14 can be formed by applying an electrode mixture material to the surface of the current collector 12 by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, etc. in the case of a positive electrode and is graphite, etc. in the case of a negative electrode.

The first electrode plate 6 and the second electrode plate 8 have an exposed portion 12a of the current collector 12 at the end of the plate in the width direction A. The width direction A is a direction intersecting the longitudinal direction of the belt. The exposed portion 12a included in the first electrode plate 6 and the exposed portion 12a included in the second electrode plate 8 protrude in mutually opposite directions in the width direction A. The exposed portion 12a is a portion of the current collector 12 that is not coated with the electrode active material layer 14.

As described above, the electrode group 2 has a structure in which the first electrode plate 6 and the second electrode plate 8 are wound. For this reason, the end of the current collector 12 in the width direction A, i.e., a plurality of exposed portions 12a are arranged in the radial direction B of the electrode group 2. In other words, the electrode group 2 has a structure in which the exposed portions 12a are stacked. The electrode group 2 may have a structure in which pieces of the first electrode plate 6 and pieces of the second electrode plate 8 are stacked in a plurality of layers, sandwiching the separator 10.

The electrode group 2 by way of one example has a first joined region 46 and a second joined region 48 in which the plurality of exposed portions 12a arranged in the radial direction B are bent in the radial direction B. The first joined region 46 and the second joined region 48 are at opposite positions in the width direction A. The plurality of exposed portions 12a included in the first joined region 46 are the exposed portions 12a of the current collector 12 provided in the first electrode plate 6. The plurality of exposed portions 12a included in the second joined region 48 are the exposed portions 12a of the current collector 12 provided in the second electrode plate 8.

For example, each exposed portion 12a is bent toward the center of winding C of the electrode group 2, i.e., bent inward in the radial direction B. The center of winding C is, for example, the geometric center of the outline of the electrode group 2 seen in the width direction A, i.e., the geometric center of the shape of the electrode group 2 projected in the width direction A. A cylindrical space extending in the width direction A extends in the center of winding C. Therefore, the current collector 12 is not located in the center of winding C. Further, in the electrode group 2 by way of one example, a plurality of first joined regions 46 and a plurality of second joined regions 48 are respectively arranged at predetermined intervals in the circumferential direction of the electrode group 2. In the embodiment, four first joined regions 46 are arranged at intervals of 90° in the circumferential direction. Further, four second joined regions 48 are arranged at intervals of 90° in the circumferential direction.

The first current collector plate 20 and the second current collector plate 22 are arranged so as to sandwich the electrode group 2 in the width direction A. The first current collector plate 20 is disposed on the side of first joined region 46. The second current collector plate 22 is disposed on the side of the second joined region 48. The thickness of the first current collector plate 20 and the second current collector plate 22, e.g., the average thickness (an average value of the thickness at 10 arbitrary points) is 0.1 mm or more and 0.8 mm or less, by way of example.

The first current collector plate 20 is made of, for example, aluminum or the like. The plurality of exposed portions 12a bent in the first joined region 46 are placed in surface contact with the first current collector plate 20. By bending each exposed portion 12a, the contact area between each exposed portion 12a and the first current collector plate 20 increases. Laser welding or the like is performed at a position where the first joined region 46 and the first current collector plate 20 overlap. Thereby, the exposed portion 12a of each winding layer and the first current collector plate 20 are joined to each other.

The second current collector plate 22 is made of, for example, nickel-plated iron, etc. The plurality of exposed portions 12a bent in the second joined region 48 are placed in surface contact with the second current collector plate 22. By bending each exposed portion 12a, the contact area between each exposed portion 12a and the second current collector plate 22 increases. Laser welding or the like is performed at a position where the second joined region 48 and the second current collector plate 22 overlap. Thereby, the exposed portion 12a of each winding layer and the second current collector plate 22 are joined to each other.

The electrode group 2 to which the first current collector plate 20 and the second current collector plate 22 are joined is housed in the bottomed cylindrical outer can 4 along with the electrolytic solution. The outer can 4 is made of, for example, copper, nickel, iron, aluminum, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

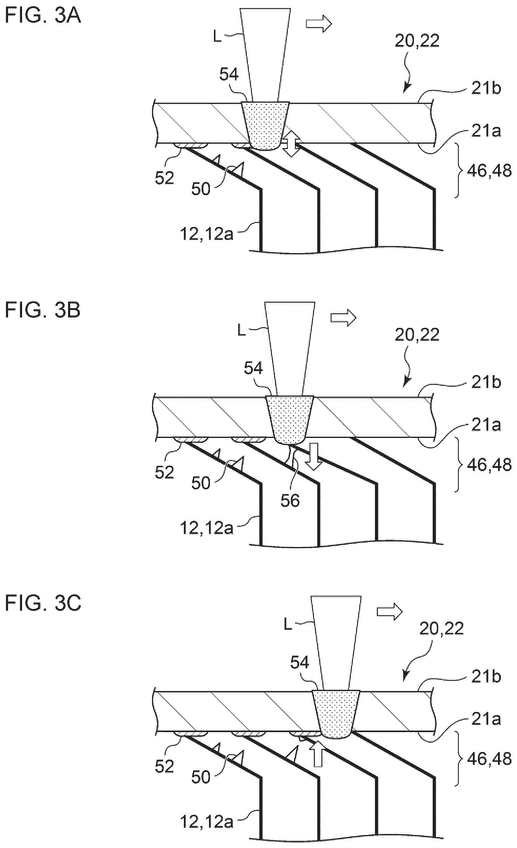

A description will now be given of a method of manufacturing the power storage apparatus 1. Figs. 3A-3C show the steps of joining the current collector 12 and the current collector plate. First, as shown in Fig. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Then, the electrode group 2 is set in a processing machine (not shown). Further, the end of the current collector 12 provided in the first electrode plate 6 is bent by the processing machine in the radial direction B. This forms the first joined region 46 including the plurality of exposed portions 12a bent in the radial direction B. After that, the first current collector plate 20 is pressed against the first joined region 46. The plurality of exposed portions 12a arranged in the first joined region 46 and the first current collector plate 20 are joined to each other by laser welding.

Specifically, as shown in Fig. 3A, the plurality of exposed portions 12a arranged are brought into contact with the first surface 21a of the first current collector plate 20, and the second surface 21b of the first current collector plate 20 opposite the first surface 21a is irradiated with laser beam L in that state. The laser beam L is radiated onto one end of a scanned region 58 (see Fig. 2B) in the first current collector plate 20. The scanned region 58 is a region overlapping the first joined region 46 in the width direction A. Thus, the scanned region 58 overlaps the plurality of exposed portions 12a arranged and extends in the direction of arrangement of the exposed portions 12a, i.e., the radial direction B of the electrode group 2. In the embodiment, four scanned regions 58 extend radially from the center of winding C. Each scanned region 58 is arranged so as not to overlap the center of winding C. Therefore, the ends of each scanned region 58 are displaced from the center of winding C in the same radial direction of the electrode group 2.

A molten portion 54 (molten pool) is formed by irradiation of the first current collector plate 20 with the laser beam L. The molten portion 54 is substantially composed only of the molten material from the first current collector plate 20 at a position where the current collector 12 is not present and is composed of the molten material from the first current collector plate 20 and the molten material from the current collector 12 at a position where the current collector 12 is present. Then, as shown in Figs. 3B and 3C, the scanned region 58 is scanned by the laser beam L in the direction of arrangement of the exposed portions 12a. The direction of travel of the laser beam L may be the direction from the center of the electrode group 2 toward the area outside or may be the direction from outside the electrode group 2 toward the center. As the scanned region 58 is scanned with the laser beam L, the molten portion 54 moves in the scanned region 58, and a joined portion 52 between each exposed portion 12a and the first current collector plate 20 is formed. As a result, each exposed portion 12a is joined to the first surface 21a of the first current collector plate 20.

When the entirety of the scanned region 58 is scanned by the laser beam L, the first current collector plate 20 is completely joined to the electrode group 2. Subsequently, the end of the current collector 12 provided in the second electrode plate 8 is bent by a processing machine. This forms a second joined region 48 including the plurality of exposed portions 12a bent in the radial direction B. After that, the second current collector plate 22 is pressed against the second joined region 48. The plurality of exposed portions 12a arranged in the second joined region 48 and the second current collector plate 22 are joined by laser welding through a process similar to that of joining the first current collector plate 20 to the electrode group 2. Thereby, each exposed portion 12a is joined to the first surface 21a of the second current collector plate 22.

The electrode group 2 to which the first current collector plate 20 and the second current collector plate 22 are joined is housed in the outer can 4 along with the electrolytic solution. Then, processes like the joint of the second current collector plate 22 to the outer can 4, joint of the first current collector plate 20 to the sealing plate 26, fitting of the sealing plate 26 in the opening of the outer can 4, etc. are performed. Thereby, the power storage apparatus 1 is obtained. Then, the sequence of steps such as the joint of respective parts, housing in the outer can 4, and fitting of the sealing plate 26 can be modified as appropriate. In the case a liquid pouring port is provided in the sealing plate 26, etc., the electrolytic solution may be poured into the outer can 4 after the sealing plate 26 is fitted in the opening of the outer can 4. Alternatively, the first joined region 46 and the second joined region 48 may be formed first, the first current collector plate 20 and the second current collector plate 22 are then pressed against the electrode group 2, and then the first current collector plate 20 and the second current collector plate 22 may be irradiated with the laser beam L.

As a result of intensive examination of the process of joining the current collector 12 and the current collector plate, we have found that an event that can reduce the quality of the power storage apparatus 1 can be caused by laser welding. In other words, the molten portion 54 expands with heat. Further, in the region irradiated with the laser beam L so far, the molten portion 54 is cooled and shrinked. For this reason, pulsation can occur in the first current collector plate 20. Further, the expansion of the molten portion 54 presses the exposed portion 12a in contact with the molten portion 54. The exposed portion 12a thus pressed approaches the adjacent exposed portion 12a. When the molten material drips from the molten portion 54 in this state due to the pulsation of the first current collector plate 20, etc., a bridge 56 of the molten material can be formed as shown in Fig. 3B between the two exposed portions 12a that are close to each other.

Then, when the irradiation position of the laser beam L is moved and the molten portion 54 is cooled, the exposed portion 12a that had been pressed by the molten portion 54 is pulled back toward the first current collector plate 20, and the two exposed portions 12a connected by the bridge 56 are separated. As a result, the bridge 56 is cut off as shown in Fig. 3C, and a portion of the molten material can remain as a metal foreign matter 50 on the surface of the exposed portion 12a distanced from the first current collector plate 20. The metal foreign matter 50 is composed of at least one of the metal constituting the current collector 12 or the metal constituting the current collector plate. By way of example, the metal foreign matter 50 adhering to the exposed portion 12a on the side of the first electrode plate 6 is composed of at least one of aluminum or an alloy thereof. The metal foreign matter 50 adhering to the exposed portion 12a on the side of the second electrode plate 8 is composed of at least one of iron, nickel, copper, or an alloy thereof.

The metal foreign matter 50 can be peeled off from the exposed portion 12a due to the vibration generated during transportation of the power storage apparatus 1, the flow of the electrolytic solution during injection, etc. The metal foreign matter 50 peeled off can dissolve in the electrolytic solution and enter the electrode group 2. Then, the metal can precipitate on the electrode plate. If the precipitated metal penetrates the separator 10, a short circuit may occur. Therefore, it is desirable to suppress the adhesion of the metal foreign matter 50 to the exposed portion 12a as much as possible.

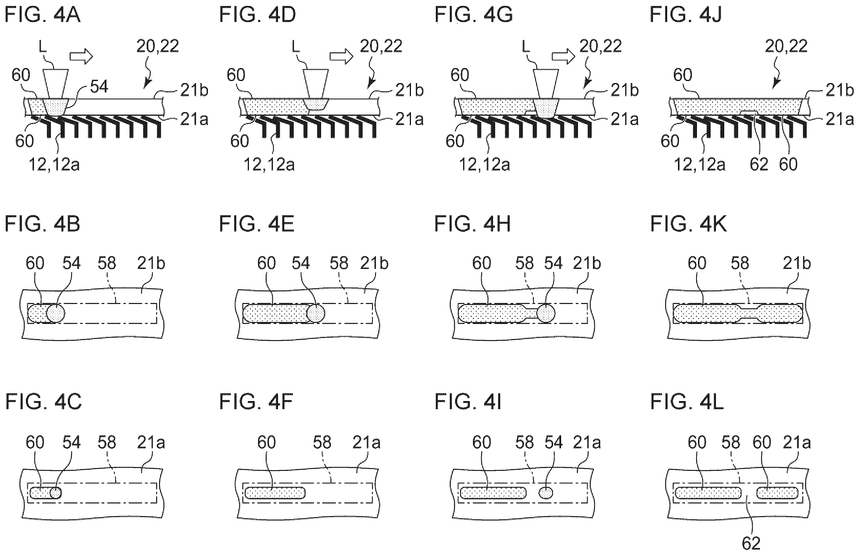

The embodiment addresses this by scanning with the laser beam L having a temporarily reduced intensity in the step of joining the current collector 12 and the current collector plate. Figs. 4A-4L illustrate intensity adjustment of the laser beam L. Figs. 4A, 4D, 4G, and 4J show the cross section of the exposed portion 12a and the current collector plate. Fig. 4B shows the second surface 21b of the current collector plate shown in Fig. 4A, and Fig. 4C shows the first surface 21a of the current collector plate shown in Fig. 4A. Fig. 4E shows the second surface 21b of the current collector plate shown in Fig. 4D, and Fig. 4F illustrates the first surface 21a of the current collector plate shown in Fig. 4D. Fig. 4H shows the second surface 21b of the current collector plate shown in Fig. 4G, and Fig. 4I illustrates the first surface 21a of the current collector plate shown in Fig. 4G. Fig. 4K shows the second surface 21b of the current collector plate shown in Fig. 4J, and Fig. 4L illustrates the first surface 21a of the current collector plate shown in Fig. 4J. In Figs. 4A-4L, illustration of the joined portion 52 is omitted. Further, only a part of the current collector plate is shown.

First, as shown in Figs. 4A-4C, the laser beam L of the first intensity is radiated onto one end of the scanned region 58 of the second surface 21b to start scanning the exposed portion 12a in the direction of arrangement. When the laser beam L of the first intensity is radiated, the molten portion 54 is formed to extend from the second surface 21b to the first surface 21a. Subsequently, as shown in Fig. 4D-Fig. 4F, the intensity of the laser beam L is temporarily lowered to the second intensity lower than the first intensity during scanning with the laser beam L. For example, the laser beam L is reduced from the first intensity to the second intensity by temporarily lowering the output of the laser beam L from the laser apparatus (not shown). When the laser beam L of the second intensity is radiated, the molten portion 54 having a depth not reaching the first surface 21a is formed. The first and second intensities of the laser beam L can be appropriately set according to the thickness of the current collector plate, the composition of the current collector plate and the current collector 12, the scanning speed of the laser beam L, etc. based on experiments and simulations by the designer.

Subsequently, as shown in Figs. 4G-4I, the intensity of the laser beam L is raised again to the first intensity. Therefore, the molten portion 54 is formed to extend from the second surface 21b to the first surface 21a. Then, as shown in Fig. 4 (J)-Fig. 4 (L), irradiation with the laser beam L is stopped when the laser beam L of the first intensity reaches the other end of the scanned region 58. The intensity of the laser beam L may be raised from the second intensity to an intensity different from the first intensity and capable of forming the molten portion 54 having a depth reaching the first surface 21a.

When the laser beam L of the first intensity is radiated, the molten portion 54 having a depth reaching the first surface 21a is formed. Therefore, a molten mark 60 (bead) is formed on both the second surface 21b and the first surface 21a. The joined portion 52 between the exposed portion 12a and the current collector plate is formed along with the molten mark 60 at the position where the exposed portion 12a and the first surface 21a come into contact. When the laser beam L of the second intensity is radiated, the molten portion 54 having a depth not reaching the first surface 21a is formed. Therefore, the molten mark 60 is formed only on the second surface 21b, and a non-molten portion 62 is formed on the second surface 21b.

Thus, the molten mark 60 continuous from one end to the other is formed in the scanned region 58 of the second surface 21b. Meanwhile, a plurality of molten marks 60 and the non-molten portion 62 located between adjacent molten marks 60 are formed in the scanned region 58 of the first surface 21a. In other words, the molten mark 60 is formed intermittently. The plurality of molten marks 60 and the non-molten portion 62 are arranged in the scanning direction of the laser beam L or in the direction of arrangement of the current collector 12. The molten mark 60 formed on the first surface 21a has an elongated shape in which the dimension (length) in the scanning direction of the laser beam L or the direction of arrangement of the exposed portions 12a is larger than the dimension (width) in the direction perpendicular to the scanning direction or the arrangement direction. For example, the molten mark 60 has a length equal to or more than twice the width. Since the molten mark 60 is divided by the non-molten portion 62 on the first surface 21a, the number of molten marks 60 on the second surface 21b is smaller than the number of molten marks 60 on the first surface 21a.

While irradiation with the laser beam L continues, the amount of expansion of the molten portion 54 gradually increases. As the amount of expansion of the molten portion 54 increases, the amount of displacement of the exposed portion 12a increases. As a result, the amount of the metal foreign matter 50 adhering to the exposed portion 12a may increase, or the individual metal foreign matter 50 may become larger. This is addressed by the method of manufacturing the power storage apparatus 1 according to the present embodiment by radiating the laser beam L from the side of the second surface 21b with the plurality of exposed portions 12a being in contact with the first surface 21a of the current collector plate and forming the molten mark 60 and the non-molten portion 62 alternately by scanning with the laser beam L that accompanies temporarily intensity reduction.

Thus, the amount of expansion of the molten portion 54 can be reduced by forming the non-molten portion 62 in the scanned region 58 of the first surface 21a. This restrains excessive expansion and contraction of the current collector plate as the exposed portion 12a and the current collector plate are welded after the formation of the non-molten portion 62. Further, the molten portion 54 at the time of formation of the non-molten portion 62 has a smaller depth and a lower temperature than the molten portion 54 at the time of formation of the molten mark 60. Therefore, the expansion and contraction of the molten portion 54 in this process is small. As a result, the adhesion of the metal foreign matter 50 to the exposed portion 12a can be restrained to restrain the occurrence of a short circuit caused by the metal foreign matter 50. Therefore, the quality of the power storage apparatus 1 can be improved.

Preferably, the laser beam L is a CW (Continuous Wave) laser beam. When the laser beam L is a pulsed laser beam, irradiation with the laser beam L is repeatedly turned on and off. When an attempt is made to form the molten portion 54 of the same depth at the same scanning speed with the pulsed laser beam and with the CW laser beam, therefore, the pulsed laser beam is required to have a higher power density than the CW laser beam. In the case of irradiation with a pulsed laser beam, therefore, the temperature of the molten portion 54 tends to be higher and therefore, the expansion and contraction of the molten portion 54 tends to be larger than in the case of a CW laser beam. For this reason, the metal foreign matter 50 easily adheres to the exposed portion 12a. By using a CW laser beam as the laser beam L, on the other hand, the adhesion of the metal foreign matter 50 to the exposed portion 12a can be restrained, and the quality of the power storage apparatus 1 can be improved.

In the second surface 21b shown in Figs. 4H and 4K, the width of the molten mark 60 is reduced by irradiation with laser beam L of the second intensity. However, the shape of the molten mark 60 on the second surface 21b is not particularly limited, and the molten mark 60 having the same width as in the case of the first intensity may be formed even when the laser beam L has the second intensity. Further, the non-molten portion 62 may also be formed on the second surface 21b when the intensity of the laser beam L is set to the second intensity. In other words, the second strength may be an intensity of a level that does not form the molten mark 60 on the second surface 21b. For example, the second intensity may be 0. In other words, the laser beam L may not be radiated.

It is preferable, however, to form the molten mark 60 continuous from one end of the scanned region 58 to the other on the second surface 21b. In the case the non-molten portion 62 is formed also on the side of the second surface 21b, the first intensity does not provide a power of the laser beam L sufficient to re-form the molten portion 54 having a depth reaching the first surface 21a as compared to the case where the molten mark 60 is continuously formed on the side of the second surface 21b. In this case, it may be necessary to switch the intensity of the laser beam from the second intensity to the third intensity higher than the first intensity to form the molten portion 54 and then switch from the third intensity to the first intensity. As a result, control of the laser beam L can be complicated. Meanwhile, the complexity of control of the laser beam L is restrained by making the molten marks 60 continuous on the second surface 21b.

In the first surface 21a shown in Fig. 4L, only one non-molten portion 62 is formed in one scanned region 58. However, the number of non-molten portions 62 is not particularly limited. There may be one or two or more non-molten portions 62. However, it is preferable to form a plurality of non-molten portions 62 in one scanned region 58. This reduces the length of the individual molten mark 60 and further restrains the growth of the molten portion 54. Therefore, the adhesion of the metal foreign matter 50 to the exposed portion 12a can be further restrained, and the quality of the power storage apparatus 1 can be improved.

Further, the timing of raising or lowering the intensity of the laser beam L can be appropriately set based on experiments and simulations by the designer. The length and arrangement of the molten mark 60 and the non-molten portion 62, the area ratio between the molten mark 60 and the non-molten portion 62, etc. are appropriately adjusted so that the electrical resistance of the power storage apparatus 1, the joint strength of the electrode group 2 and the current collector plate, etc. are maintained to have a desired value even when the non-molten portion 62 is formed on the first surface 21a.

That the metal foreign matter 50 can adhere to the exposed portion 12a as the exposed portion 12a and the current collector plate are joined, that the metal foreign matter 50 can be peeled off from the exposed portion 12a during manufacturing or use of the power storage apparatus 1, and that a short circuit can occur due to the metal foreign matter 50 that is peeled off are phenomena identified by the inventors as a result of intensive study and shall not be understood as a general knowledge of those skilled in the art. Since those skilled in the art are not aware of these phenomena, it is common in the art for skilled persons to give priority to reducing the electrical resistance of the power storage apparatus 1 or increasing the strength of joint of the electrode group 2 and the current collector plate and not to form the non-molten portion 62 in the scanned region 58 of the first surface 21a.

In the embodiment, the non-molten portion 62 is formed in the scanned region 58 of the first surface 21a by scanning with the laser beam L that accompanies temporarily intensity reduction, but the method of forming the non-molten portion 62 is not particularly limited. For example, the non-molten portion 62 can be formed by temporarily increasing the scanning speed of the laser beam L. Further, the non-molten portion 62 can be formed by temporarily moving the laser head away from or closer to the current collector plate to shift the focus of the laser beam L. The non-molten portion 62 can also be formed by keeping the intensity of the laser beam L constant and increasing the thickness of the current collector plate only in the region where the non-molten portion 62 is formed.

The embodiment of the present disclosure has been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [Item 1]

A method of manufacturing a power storage apparatus (1) including:
preparing an electrode group (2) including a current collector (12) in which an electrode active material layer (14) is stacked, the electrode group (2) having a structure in which a plurality of exposed portions (12a) of the current collector (12) that are not coated with the electrode active material layer (14) are arranged;
bringing the plurality of exposed portions (12a) arranged into contact with a first surface (21a) of a current collector plate (20, 22) and irradiating a second surface (21b) of the current collector plate (20, 22) opposite to the first surface (21a) with a laser beam (L);
scanning a scanned region (58) overlapping the plurality of exposed portions (12a) arranged and extending in a direction of arrangement of the exposed portions (12a) with the laser beam (L) to join the plurality of exposed portions (12a) to the first surface (21a); and
forming, through joining, a plurality of molten marks (60) having a dimension in a scanning direction of the laser beam (L) larger than a dimension in a direction perpendicular to the scanning direction and a non-molten portion (62) located between the adjacent molten marks (60) on the first surface (21a).

### [Item 2]

The method of manufacturing a power storage apparatus (1) according to Item 1,
wherein the laser beam (L) is a CW laser beam.

### [Item 3]

The method of manufacturing a power storage apparatus (1) according to Item 1 or 2, further including:
forming the molten mark (60) continuous from one end of the scanned region (58) to another end on the second surface (21b).

### [Item 4]

The method of manufacturing a power storage apparatus (1) according to any one of Item 1 through Item 3, further including:
forming a plurality of non-molten portions (62).

### [Item 5]

A power storage apparatus (1) including:
an electrode group (2) including a current collector (12) in which an electrode active material layer (14) is stacked;
a current collector plate (20, 22) joined to the current collector (12),
wherein the electrode group (2) has a structure in which a plurality of exposed portions (12a) in the current collector (12) that are not coated with the electrode active material layer (14) are arranged, and the plurality of exposed portions (12a) arranged are joined to a first surface (21a) of the current collector plate (20, 22), and
wherein the first surface (21a) includes, in a region (58) overlapping the plurality of exposed portions (12a) and extending in a direction of arrangement of the exposed portions (12a), a plurality of molten marks (60) having a dimension in a direction of arrangement larger than a dimension in a direction perpendicular to the direction of arrangement and a non-molten portion (62) located between the adjacent molten marks (60).

### INDUSTRIAL APPLICABILITY

The present disclosure is applicable to a method of manufacturing a power storage apparatus and to a power storage apparatus.

### REFERENCE SIGNS LIST

1 power storage apparatus, 2 electrode group, 12 current collector, 12a exposed portion, 14 electrode active material layer, 20 first current collector plate, 22 second current collector plate, 21a first surface, 21b second surface, 54 molten portion, 58 scanned region, 60 molten mark, 62 non-molten portion, L laser beam

## Claims

1. A method of manufacturing a power storage apparatus comprising:
preparing an electrode group including a current collector in which an electrode active material layer is stacked, the electrode group having a structure in which a plurality of exposed portions of the current collector that are not coated with the electrode active material layer are arranged;
bringing the plurality of exposed portions arranged into contact with a first surface of a current collector plate and irradiating a second surface of the current collector plate opposite to the first surface with a laser beam;
scanning a scanned region overlapping the plurality of exposed portions arranged and extending in a direction of arrangement of the exposed portions with the laser beam to join the plurality of exposed portions to the first surface; and
forming, through joining, a plurality of molten marks having a dimension in a scanning direction of the laser beam larger than a dimension in a direction perpendicular to the scanning direction and a non-molten portion located between the adjacent molten marks on the first surface.

2. The method of manufacturing a power storage apparatus according to Claim 1,
wherein the laser beam is a CW laser beam.

3. The method of manufacturing a power storage apparatus according to Claim 1 or 2, further comprising:
forming the molten mark continuous from one end of the scanned region to another end on the second surface.

4. The method of manufacturing a power storage apparatus according to Claim 1 or 2, further comprising:
forming a plurality of non-molten portions.

5. A power storage apparatus comprising:
an electrode group including a current collector in which an electrode active material layer is stacked;
a current collector plate joined to the current collector,
wherein the electrode group has a structure in which a plurality of exposed portions of the current collector that are not coated with the electrode active material layer are arranged, and the plurality of exposed portions arranged are joined to a first surface of the current collector plate, and
wherein the first surface includes, in a region overlapping the plurality of exposed portions and extending in a direction of arrangement of the exposed portions, a plurality of molten marks having a dimension in a direction of arrangement larger than a dimension in a direction perpendicular to the direction of arrangement and a non-molten portion located between the adjacent molten marks.
